**Europäisches Patentamt**

**European Patent Office**

**Office européen des brevets**

(19)

(11) Veröffentlichungsnummer : **0 176 750 B2**

(12)                 **NEUE EUROPÄISCHE PATENTSCHRIFT**

(45) Veröffentlichungstag der neuen Patentschrift :
01.07.92 Patentblatt 92/27

(51) Int. Cl.$^5$ : **B60K 17/06**, F16H 59/40

(21) Anmeldenummer : 85110657.5

(22) Anmeldetag : 24.08.85

(54) **Verfahren zur elektronischen Steuerung eines automatischen Fahrzeuggetriebes.**

(30) Priorität : 03.10.84 DE 3436190

(43) Veröffentlichungstag der Anmeldung :
09.04.86 Patentblatt 86/15

(45) Bekanntmachung des Hinweises auf die
Patenterteilung :
27.04.88 Patentblatt 88/17

(45) Bekanntmachung des Hinweises auf die
Entscheidung über den Einspruch :
01.07.92 Patentblatt 92/27

(84) Benannte Vertragsstaaten :
DE FR GB SE

(56) Entgegenhaltungen :
DE-A- 2 819 302
DE-A- 2 843 183
DE-A- 3 025 054
DE-A- 3 116 593
DE-A- 3 205 767
DE-B- 1 948 953
DE-C- 1 932 986

(56) Entgegenhaltungen :
FR-A- 2 375 064
FR-A- 2 394 413
US-A- 4 283 970
US-A- 4 373 619
Dr.-Ing. K. Steinbuch "Taschenbuch der Nachrichtenverarbeitung", Springer-Verlag, 2. Auflage 1967, Seiten 910-914
"IEEE Transactions on Industrial Electronics
and Control Instrumentation", Vol. IECI-26,
number 3, August 1979, Seiten185-191
Guy Olivier et al: "Digitally Controlled Thyristor Current Source"

(73) Patentinhaber : ROBERT BOSCH GMBH
Postfach 30 02 20
W-7000 Stuttgart 30 (DE)

(72) Erfinder : Eschrich, Gerhard
Steinbeissstrasse 34
W-7016 Gerlingen (DE)
Erfinder : Schreiber, Achim
Frankenstrasse 34
W-7141 Schwieberdingen (DE)
Erfinder : Schwab, Manfred, Dr. Dipl.-Phys.
Schubertstrasse 34
W-7990 Friedrichshafen (DE)

EP 0 176 750 B2

## Beschreibung

## Stand der Technik

Die Erfindung geht aus von einem Verfahren mit den Merkmalen des Oberbegriffs des unabhängigen Patentanspruchs, die aus DE-A- 3025 054 bekannt sind.

Es is bekannt, in automatischen Fahrzeuggetrieben den Druck des Arbeitsmediums, das zur Betätigung der Reibelemente des Getriebes dient, in Abhängigkeit von verschiedenen Betriebsparametern des Kraftfahrzeugs einzustellen. Bei der aus DE-C-1 932 986 bekannten Getriebeschaltanordnung für Fahrzeuggetriebe erfolgt die Druckeinstellung über eine elektronische Steuerung über vorgegebene Druckkennlinien. Ein Ausgleich von Parameteränderungen infolge von Serienstreuungen oder Alterungseffekten kann dadurch nicht erreicht werden. Reibwerte von Lamellen, Kennlinien von Druckreglern oder Federn sowie das vom Motor abgegebene Moment sind jedoch diesen Streuungen unterworfen, wodurch einerseits Schaltqualitätsschwankungen hervorgerufen werden, andererseits jedoch hohe Anforderungen an'die Toleranzen der verwendeten Teile gestellt werden. Dies wirkt sich kostenmäßig sehr ungünstig aus.

In der DE-A-2 843 183 sowie in der DE-C-3 205 767 wurden zur Abhilfe dieser Situation geschlossene Regelkreise vorgeschlagen. Diese haben jedoch den Nachteil. daß eine der notwendigen Dynamik Rechnung tragende Regelgröße erforderlich ist. Grundsätzlich sind bei der Regelstrecke Motor-Getriebe infolge der vorhandenen Totzeiten im gesamten Betriebsstrang Stabilitätsprobleme zu erwarten. und es müssen deutliche Regelabweichungen in Kauf genommen werden bevor die Regelung korrigierend eingreifen kann. Dies wirkt sich durch einen schlechten Schaltkomfort aus.

Aus der eingangs erwähnten DE-A-3 025 054 ist ein Druckegler für eine automatische Getriebesteuerung für Fahrzeuge bekannt geworden, bei der für den Gangwechsel in Abhängigkeit von der Last eine gewünschte Schaltzeit abgelegt ist. Die tatsächlich auftretende Schaltzeit wird gemessen und mit der gespeicherten Schaltzeit verglichen. Treten hierbei Abweichungen auf, so wird in einem Korrekturregister ein Korrekturwert abgelegt. Dieser Korrekturwert wird bei einem Gangwechsel den Druckkennlinien hinzugefügt, die ursprünglich in einem Speicher abgelegt sind und dazu dienen, um den Druck während des Gangwechsels zu steuern.

## Vorteile der Erfindung

Das erfindungsgemäße Verfahren mit den Merkmalen des Hauptanspruchs hat demgegenüber den Vorteil, daß Korrekturwerte in Abhängigkeit der Last und Drehzahl errechnet und abgelegt werden, so daß eine exakte Anpassung an die verschiedenen Last-Drehzahl-Verkältnissen erfolgen Kann. Als weiterer Vorteil ist anzusehen, daß nicht gelegentlich auftretende größer Abweichungen der den Schaltvorgang charakterisierenden Größe (Ist-Größe) zu einer Veränderung von Korrekturwerten führen und daß der Einfluß von Störgrößen nicht gleich zur Bildung von neuen Korrekturwerten führt. Dadurch wird gewährleistet, daß das Fahrzeugverhalten nicht ständig verändert wird. Insgesant wird durch die erfindungsgemäßen Maßnahmen der Schaltkomfort über den ganzen Fahrbetriebsbereich erhöht. Die erfindungsgemäße adaptive Steuerung läßt sich zudem leicht und kostengünstig durch eine Erweiterung der Software der bekannten elektronischen Getriebesteuerungen realisieren.

Durch die in den Unteransprüchen aufgeführten Maßnahmen sind vorteilhafte Weiterbildungen und Verbesserungen des im Hauptanspruch angegebenen Verfahrens möglich.

Besonders einfach und kostengünstig läßt sich die Zeitdauer des Schaltvorgangs oder das Schleifen der Reibelemente oder der Gradient der Getriebeeingangsdrehzahl während des Schaltvorgangs adaptiv steuern.

## Zeichnung

Ein Ausführungsbeispiel der Erfindung ist in der Zeichnung dargestellt und in der nachfolgenden Beschreibung näher erläutert. Es zeigen Figur 1 ein Blockschaltbild des Ausführungsbeispiels, Figur 2 ein Signaldiagramm zur Erläuterung der Wirkungsweise, Figur 3 fünf Kennfelder zur Erläuterung der Bildung der Korrekturwerte und Figur 4 ein Flußdiagramm zur Erläuterung der erforderlichen Arbeitsschritte.

## Beschreibung des Ausführungsbeispiels

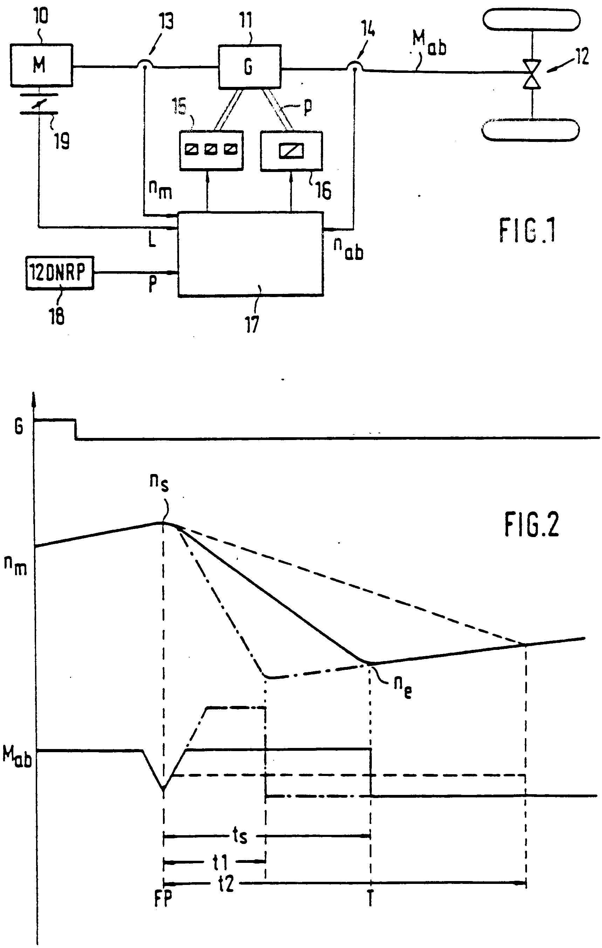

In dem in Figur 1 dargestellten Ausführungsbeispiel ist ein Motor 10 eines Kraftfahrzeuges über ein Getriebe 11 mit einem Abtrieb 12 verbunden. Am Ein- und Ausgang des Getriebes 11 befinden sich ein Motordrehzahl-Geber 13 (Getriebeeingangsdrehzahl-Geber) und ein Abtriebsdrehzahl-Geber 14. Zur Steuerung des Getriebes 11 dienen einmal Gangschaltventile 15, über die der jeweils einzulegende Gang betätigt wird und zum anderen ein Druckregler 16, der den bei der Betätigung der Reibelemente des Getriebes 12 wirksamen Druck p einstellt.

Die Gangschaltventile 15 werden in der üblichen Weise von einer elektronischen Getriebesteuereinheit 17 angesteuert, der verschiedene Betriebsparameter in an sich bekannter Weise zugeführt werden. In Figur 1 sind davon die Motordrehzahl $n_m$, die Abtriebsdrehzahl $n_{ab}$ die Motorlast L sowie der Programmbefehl P eines Positions-Schalters 18 dargestellt. Als Lastgeber ist ein Drosselklappengeber 19 dargestellt.

Zur prinzipiellen Wirkungsweise des Einlegens der Gänge, der Betätigung der Gangschaltventile sowie des Druckreglers 16 sei auf den eingangs angegebenen Stand der Technik sowie auf Bosch Technische Berichte, Band 7 (1983) Heft 4, verwiesen. Die notwendigen Steuerfunktionen werden dabei in der vorzugsweise als Mikrorechner ausgebildeten elektronischen Getriebesteuereinheit 17 erzeugt.

Im folgenden soll die erfindungsgemäße Steuerung prinzipiell anhand der in Figur 2 dargestellten Signaldiagramme am Beispiel eines Hochschaltvorgangs erläutert werden. Die erfindungsgemäße adaptive Steuerung kann jedoch auch bei Schubrückschaltungen angewandt werden, also bei Rückschaltung ohne Unterbrechung der Zugkraft.

Nach Auftreten eines Gangschaltsignals G steigt die Motordrehzahl $n_m$ noch bis zum Erreichen des Freilaufpunktes FP an, worunter man den Punkt versteht, an dem die dem neuen Gang zugeordneten Reibelemente das volle Moment übernehmen und die dem alten Gang zugeordneten Reibelemente (bzw. der zügehörige Freilauf) lösen. Ab diesem Freilaufpunkt FP beginnt nun die Motordrehzahl $n_m$ abzusinken, während gleichzeitig die Reibelemente schleifen. Zum Zeitpunkt T ist der neue Gang eingelegt, die Reibelemente hatten wieder und die Drehzahl beginnt wieder leicht anzusteigen.

Der Schaltkomfort ist durch den Verlauf des Abtriebsmoments bestimmt. Dabei soll der Momentensprung zum Zeitpunkt T möglichst gering sein. Andererseits ist die Belastung der Reibelemente durch das Kupplungsmoment und die Schleifzeit Ts bestimmt. Da einerseits aus diesem Grunde die Schleifzeit möglichst gering, andererseits der Momentensprung ebenfalls möglichst gering sein soll, wird durch Vergleich der durchgezogenen Kurven mit den unterbrochenen und strichpunktierten Kurven deutlich, daß die Steuerung des Schaltablaufs stets einen Kompromiß erfordert. Dieser Kompromiß wird durch eine Soll-Schleifzeit $t_s$ vorgegeben. Ist die Schleifzeit zu kurz (t1), so ergibt sich ein zu großer Momentensprung und der Druck p wird für die folgenden Schaltvorgänge verringert, um eine Verlängerung der Schleifzeit zu erreichen. Ist dagegen die Schleifzeit zu lang (t2), so ergibt sich zwar ein geringer Momentensprung, jedoch führt diese lange Schleifzeit zu einer zu großen Belastung der Reibelemente und der Druck p wird dementsprechend für die folgenden Schaltvorgänge erhöht.

Als den Schaltvorgang charakterisierende Größe kann anstelle der Schleifzeit prinzipiell auch die Schaltzeit das ist die Zeitdauer zwischen dem Gangschaltsignal G und dem Ende der Schleifzeit, oder der Gradient der Motordrehzahl $n_m$ (Getriebeeingangsdrehzahl) während des Schleifens der Reibelemente gewählt werden.

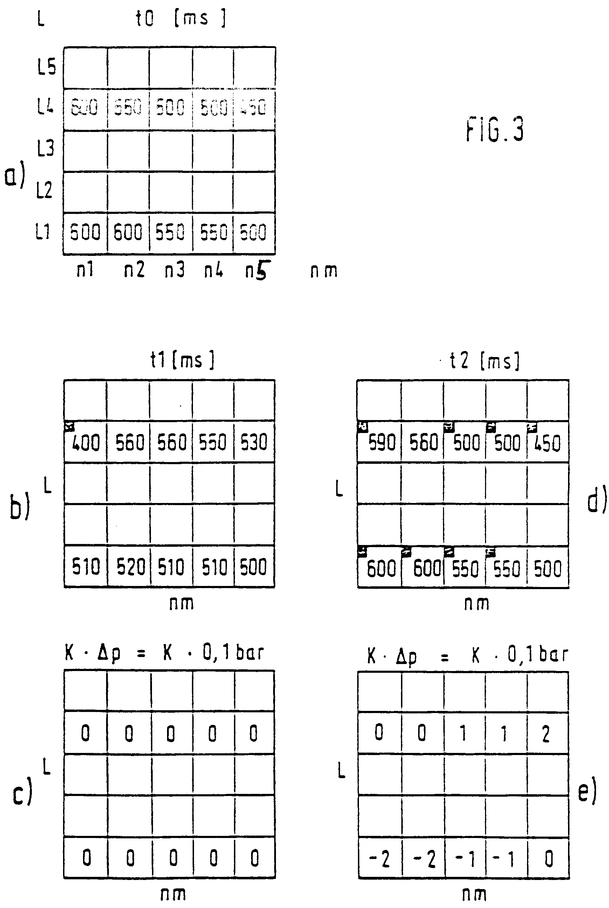

Zur Durchführung der Adaption werden die sollwerte für die Schleifzeit to gemäß Figur 3a in einem Last/Drehzahl-Kennfeld abgelegt. Dabei kann prinzipiell die Rasterung für die Last- und Drehzahlklassen (L1 bis L5, n1 bis n4) beliebig gewählt werden, wobei gemäß Figur 3a 25 Sollwerte für to in einem Festwert-Speicher in der elektronischen Getriebesteuereinheit 17 gespeichert werden. Die gespeicherten Werten sind in Millisekunden (ms) angegeben, wobei zur Vereinfachung der Darstellung nicht alle Zahlenwerte eingesetzt wurden. Die Lastklassen können z. B. wie folgt definiert werden: Schub L1, Nullast L2, Teillast L3, Halblast L4 und Vollast L5.

In einem zweiten, genau gleich strukturierten Kennfeld, wie es in Figur 3b dargestellt ist, werden die tatsächlich gemessenen Werte der Adaptionsgröße Schleifzeit eingetragen und in einem RAM oder in einem nichtflüchtigen Speicher (z. B. EPROM oder gepuffertes RAM) gespeichert. Diese tatsächlichen Werte werden durch zeitliche Filterung aus mehreren Schaltvorgängen in den betrachteten Last/Drehzahl.Rasterfeld gebildet. Diese Mittelung kann beispielsweise über vier Schaltvorgänge erfolgen. Die Einteilung in die verschiedenen Rasterfelder nimmt das Mikrorechnersystem aufgrund der bei der jeweiligen Schaltung vorliegenden Bedingungen vor.

In einem dritten wiederum gleichartig strukturierten Kennfeld werden schließlich die Korrekturwerte für den aus abgelegten Kennlinien oder einem vorgegebenen Algorithmus jeweils ermitteln Druck gespeichert. Dies ist in Figur 3c dargestellt. Diese Werte werden in einem nichtflüchtigen Speicher gespeichert, so daß die Mittelung und Korrekturwertbildung jeweils über eine beliebig vorgegebene Zeit bzw. beliebig vorgegebene Zahl von Schaltvorgängen erfolgen kann. Die Korrekturwerte werden dabei jeweils in Abhängigkeit von der Sollwert-Istwert-Abweichung um eine entsprechende Zahl von Inkrementen erhöht oder erniedrigt, wobei jedes Inkrement mit einem bestimmten Druck bewertet wird, der gemäß Figur 3c 0,1 bar beträgt. Zu Beginn der Adaption werden die Werte des Sollwert-Kennfelds (Figur 3a) auf das Istwert-Kennfeld (Figur 3b) übertragen. Gleichzeitig werden alle Korrekturwerte im Korrekturwert-Kennfeld (Figur 3c) auf Null gesetzt. Nach entsprechender Fahrzeit ändern sich die Werte im Istwert-Kennfeld entsprechend der ermittelten Istwerte der Schleifzeiten. Die Figuren 3b und 3c zeigen die Kennfelder zu einem Zeitpunkt tl, bevor der erste Adaptionsschritt durchgeführt wird, d.h., die Korrekturwerte haben alle noch den Wert Null, jedoch wurden bereits gültige Mittelwerte für die Schleifzeiten ermittelt. Dies ist für die Drehzahlen n2 bis n4 der Fall, während die Mittelwertbildung für die Drehzahl n1 und die Last L4 noch nicht abgeschlossen ist, weil z. B. die notwendige Anzahl von Schaltungen bei dieser Drehzahl-Last-Kombination noch nicht erreicht ist. Die noch nicht abgeschlossene Mittelwertbildung wird durch eine Markierung im Speicher (als schwarzes Quadrat dargestellt) erkannt. Es ist zu erkennen, daß im dargestellten Beispiel für die Last L4 im oberen Drehzahlbereich die tatsächlichen Schleifzeiten deutlich über den Sollwerten liegen- Für die Last L1 ist es im unteren Drehzahlbereich umgekehrt.

In den Figuren 3d und 3e ist der Zustand der Adaptionskennfelder unmittelbar nach dem ersten Adaptionsschritt dargestellt. Die Schwellwerte für eine Adaption um ein Inkrement wurden hier z. B. auf 40 ms gelegt, also für zwei Inkremente auf 80 ms. Für die verschieden dargestellten Last/Drehzahl-Bedingungen ergeben sich dadurch die folgenden Adaptionsschritte:

n1/L4 Mittelwert noch nicht gültig, keine Adaption
n2/L4 Abweichung vom Sollwert unter Schwelle, keine Adaption
n3/L4 Korrekturwerterhöhung um 1 Inkrement
n4/L4 Korrekturwerterhöhung um 1 Inkrement
n5/L4 Korrekturwerterhöhung um 2 Inkremente
n1/L1 Korrekturwertverringerung um 2 Inkremente
n2/L1 Korrekturwertverringerung um 2 Inkremente
n3/L1 Korrekturwertverringerung um 1 Inkrement
n4/L1 Korrekturwertverringerung um 1 Inkrement
n5/L1 Abweichung vom Sollwert unter Schwelle, keine Adaption

Wird eine Korrektur durchgeführt, also der Korrekturwert verändert, dann wird jeweils der Istwert der Schleifzeit wieder auf den Sollwert gesetzt und als noch nicht gültig gekennzeichnet.

Selbstverständlich kann die Zahl der Last- und Drehzahlklassen beliebig erweitert oder verringert werden.

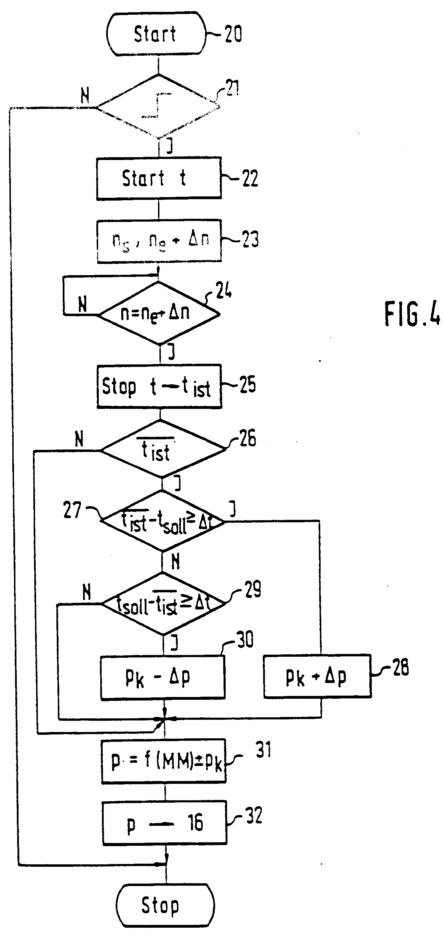

Das in Figur 4 dargestellte Flußdiagramm zeigt ein Beispiel für den Ablauf einer Adaption. Diese Adaption kann vorzugsweise als Unterprogramm im Programm der Getriebesteuerung enthalten sein. In diesem Beispiel wird anstelle der Schleifzeit die Schaltzeit als charakterisierende Größe für den Schaltvorgang gewählt, also die Zeit zwischen dem Auftreten eines Gangschaltbefehls und dem Ende der Schleifzeit.

Nach dem Start 20 des Adaptionsablaufs wird abgefragt, ob ein Gangschaltsignal 21 vorliegt, im dargestellten Beispiel ein Hochschaltsignal. Ist dies der Fall, so erfolgt im Mikrorechner ein Auslösebefehl 22 für eine Zeitstufe. Danach folgt ein Berechnungsablauf 23, durch den die Synchrondrehzahl $n_s$ im Freilaufpunkt FP berechnet wird. Daraus wird zur Erkennung des Schaltungsendes diejenige Drehzahl $n_e$ ermittelt, bei der der Schaltvorgang abgeschlossen ist, also die Schleifzeit beendet ist. Damit diese das Schaltungsende vorgebende Drehzahl auch tatsächlich erreicht wird, kann voirzugsweise ein geringer Vorhalt vorgegeben werden, so daß für die Erkennung des Schaltungsendes eine geringfügig gegenüber der Drehzahl $n_e$ erhöhte Drehzahl vorgegeben wird. Danach wird in einer Warteschleife 24 das Schaltungsende abgewartet, also das Erreichen der um $\Delta n$ erhöhten Drehzahl $n_e$. Ist das Schaltungsende erreicht, so erfolgt ein Stoppbefehl 25 für das Zeitglied, wobei die Laufzeit des Zeitglieds als Istwert $t_{ist}$ in die den vorliegenden Last-Drehzahlverhältnissen entsprechende Stelle im Istwert-Speicher eingespeichert wird- indem mit dem dort vorliegenden Wert eine Mittelwertbildung $t_{ist}$ durchgeführt wird. Nach einem Prüfschritt 26, in dem das Vorliegen eine über die notwendige Zahl von Schaltvorgängen gemittelten Istwerts geprüft wird, erfolgt ein weiterer Prüfschritt 27, in dem geprüft wird, ob die Schaltzeit um einen Betrag von $\Delta t$ zu lang ist, wobei $\Delta t$ beispielsweise 40 ms betragen kann. Ist dies der Fall, so erfolgt eine Druckerhöhung 28 des gespeicherten Korrekturdrucks $p_k$ um $\Delta p$, wobei $\Delta p$ beispielsweise 0,1 bar betragen kann. Gemäß den Figuren 3c und 3e wird der neue Korrekturdruck als entsprechendes Inkrement im Korrekturkennfeld abgelegt. Wird in einem Prüfschritt 29 festgestellt, daß die Schaltzeit zu kurz ist, so wird entsprechend eine Druckverringerung 30 um - $\Delta p$ vorgenommen.

Die Druckerhöhung wie auch die Druckverringerung kann natürlich auch um Vielfache von $\Delta p$ erfolgen, wenn die Schaltzeittoleranz $\Delta t$ um ein Vielfaches überschritten wird.

In einem Berechnungsablauf 31 wird nun für die folgenden Schaltvorgänge der vorzugebend Schaltdruck p festgelegt, der sich aus einem aus abgelegten Kennlinien oder einem vorgegebenen Algorithmus bestimmten Druck f (MM), korrigiert um den Korrekturdruck $p_k$, ergibt. Über den Druckregler 16 wird dann der ermittelte Druckwert p in einen entsprechenden hydraulischen Druck umgewandelt 32 und dem Getriebe 11 zugeführt.

**Patentansprüche**

1. Verfahren zur elektronischen Steuerung eines automatischen Fahrzeuggetriebes mit vorzugsweise elektrohydraulisch betätigbaren Reibelementen zur Umschaltung zwischen verschiedenen Übersetzungsstufen, wobei eine den Schaltvorgang charakterisierende Größe (Ist-Werte) mit gespeicherten Soll-Werten verglichen wird und bei Überschreitung einer vorgebbaren Abweichung ein Korrekturwert gespeichert wird, der korrigierend im Sinne einer adaptiven Steuerung auf die Bildung einer Steuergröße für die Reibelemente, vorzugsweise den hydraulischen Druck, einwirkt, dadurch gekennzeichnet, daß die soll-Werte, die Ist-Werte für die charakterisiende Größe sowie die gebildeten Korrekturwerte in Last-Drehzahl-Kennfeldernabgelegt werden, daß die Ist-Werte durch Mittelwertbildung von Einzelwerten aus mehreren Schaltvorgängen gebildet werden, daß bis zum Abschluß des Mittelwertbildung der vorherige Korrekturwert erhalten bleibt und daß nach Durchführung der Korrektur die Ist-Werte für die Mittelwertbildung bei Veränderung des Korrekturwerts auf die Sollwerte gesetzt werden.

2. Verfahren nach Anspruch 1, dadurch gekennzeichnet, daß die den Schaltvorgang charakterisierende Größe die Zeitdauer ($t_s$) des Schaltvorgangs oder des Schleifens der Reibelemente ist.

3. Verfahren nach Anspruch 1, dadurch gekennzeichnet, daß die den Schaltvorgang charakterisierende Größe der Gradient der Getriebeeingangsdrehzahl ($n_m$) während des Schleifens der Reibelemente ist.

4. Verfahren nach Ansprüchen einem der vorhergenden, dadurch gekennzeichnet, daß die Ist-Größe und die Korrekturwerte in nicht flüchtigen Speichern (z. B. EPROM, gepuffertes RAM) abgelegt werden.

5. Verfahren nach einem der vorhergehenden Ansprüche, dadurch gekennzeichnet, daß die gespeicherten Korrekturwerte jeweils bei Überschreiten der vorgegebenen Soll-Ist-Abweichung um ein Inkrement verändert werden, wobei jedem Inkrement ein bestimmter Wert der Steuergröße zugeordnet ist.

6. Verfahren nach einem der vorhergehenden Ansprüche, dadurch gekennzeichnet, daß für die Korrekturwerte obere und untere Grenzwerte vorgesehen sind.

7. Verfahren nach einem der vorhergehenden Ansprüche, dadurch gekennzeichnet, daß die Korrekturwerte additiv oder multiplikativ auf die Steuergröße einwirken.

8. Verfahren nach einem der vorhergehenden Ansprüche, dadurch gekennzeichnet, daß der Steuergröße (f(MM)) ein Betrag hinzugefügt wird, der sich aus der multiplikativen Verknüpfung des entsprechenden Korrekturwertes (K) mit einem festen Steuergrößenwert ($\Delta p$) ergibt (f(MM) + K x $\Delta p$).

## Claims

1. Method for electronically controlling an automatic vehicle transmission having friction elements which can be operated preferably electro-hydraulically for changing between various transmission ratios, a variable (actual values) characterising the gear changing process being compared with stored desired values and, if a deviation which can be predetermined is exceeded, a correction value being stored which acts in a correcting manner in the sense of adaptive control of the formation of a control variable for the friction elements, preferably the hydraulic pressure, characterised in that the desired variables, the actual values for the characterising variable and the correction values formed are placed in load-speed data fields, in that the actual values are formed by forming a mean value of individual values from a plurality of gear changing processes, in that the previous correction value is maintained until formation of the mean value has been completed, and in that the actual values for forming the mean value during modification of the correction value are set on the desired values after carrying out the correction.

2. Method according to Claim 1, characterised in that the variable characterising the gear changing process is the time duration ($t_s$) of the gear changing process or of the slipping of the friction elements.

3. Method according to Claim 1, characterised in that the variable characterising the gear changing process is the gradient of the transmission input speed ($n_m$) during slipping of the friction elements.

4. Method according to one of the preceding claims, characterised in that the actual variable and the correction values are set in non-volatile memories (for example EPROM, buffered RAM).

5. Method according to one of the preceding claims, characterised in that the stored correction values are modified by an increment whenever the predetermined desired-actual deviation is exceeded, a specific value of the control variable being allocated to each increment.

6. Method according to one of the preceding claims, characterised in that upper and lower limit values are provided for the correction values.

7. Method according to one of the preceding claims, characterised in that the correction values act in an additive or multiplying manner on the control variable.

8. Method according to one of the preceding claims, characterised in that the control variable (f(MM)) has added to it an amount produced by multiplying the corresponding correction value (K) by a fixed control variable value ($\Delta p$), (f(MM) + K x $\Delta p$).

**Revendications**

1. Procédé pour la commande électronique d'une boîte de vitesses automatique de véhicule, avec des éléments de friction susceptibles d'être actionnés de préférence électriquement et hydrauliquement pour la commutation entre différents rapports de vitesses, procédé selon lequel une grandeur caractérisant le processus de commutation (valeur réelle) est comparée avec des valeurs de consigne mémorisées, et que lors d'un dépassement d'un écart susceptible d'être prédéfini, une valeur de correction est mémorisée qui agit, en la corrigeant, dans le sens d'une commande adaptative, sur la formation d'une grandeur de commande pour les éléments de friction, de préférence, la pression hydraulique, caractérisé en ce qu'on inscrit des valeurs de consigne, les valeurs réelles de la grandeur caractérisante ainsi que des valeurs de correction obtenues dans les champs de caractéristiques charge/vitesse de rotation, et en ce qu'on forme les valeurs réelles en formant la moyenne des différentes valeurs provenant de plusieurs opérations de commutation, en ce que jusqu'à la fin de la formation de la valeur moyenne on conserve la valeur de correction précédente et en ce qu'après exécution de la correction on place les valeurs réelles servant à former la moyenne en cas de modification de la valeur de correction, à la place des valeurs de consigne.

2. Procédé selon la revendication 1, caractérisé en ce que la grandeur caractérisant le processus de commutation est la période de temps ($t_s$) du processus de commutation, ou bien du glissement des éléments de friction.

3. Procédé selon la revendication 1, caractérisé en ce que la grandeur caractérisant le processus de commutation est le gradient de la vitesse de rotation ($n_m$) à l'entrée de la boîte de vitesses pendant le glissement des éléments de friction.

4. Procédé selon l'une des revendications précédentes, caractérisé en ce que la grandeur réelle et les valeurs de correction, sont déposées dans des mémoires non volatiles (par exemple EPROM, RAM tamponnée).

5. Procédé selon une des précédentes revendications, caractérisé en ce que les valeurs de correction mémorisées sont respectivement modifiées, lors du dépassement de l'écart susceptible d'être prédéfini entre la valeur de consigne et la valeur réelle, d'un incrément, une valeur déterminée de la grandeur de commande étant associée à chaque incrément.

6. Procédé selon l'une des revendications précédentes, caractérisé en ce que des valeurs limites supérieures et inférieures sont prévues pour les valeurs de correction.

7. Procédé selon l'une des revendications précédentes, caractérisé en ce que les valeurs de correction agissent sur la grandeur de commande de façon additive ou multiplicative.

8. Procédé selon l'une des revendications précédentes, caractérisé en ce qu'à la grandeur de commande (f (MM) ) est ajoutée une valeur qui résulte de la combinaison multiplicative de la valeur de correction correspondante (K) avec une valeur fixe ($\Delta$p) de la grandeur de commande (F (MM) $\pm$ K x $\Delta$p).

FIG.1

FIG.2

FIG.3

a)

t0 [ms]

| L | n1 | n2 | n3 | n4 | n5 | nm |
|---|---|---|---|---|---|---|
| L5 | | | | | | |
| L4 | 600 | 550 | 500 | 500 | 450 | |
| L3 | | | | | | |
| L2 | | | | | | |
| L1 | 600 | 600 | 550 | 550 | 500 | |

b)

t1 [ms]

| L | | | | | |
|---|---|---|---|---|---|
| | | | | | |
| | 400 | 560 | 560 | 550 | 530 |
| | | | | | |
| | | | | | |
| | 510 | 520 | 510 | 510 | 500 |

nm

d)

t2 [ms]

| L | | | | | |
|---|---|---|---|---|---|
| | | | | | |
| | 590 | 560 | 500 | 500 | 450 |
| | | | | | |
| | | | | | |
| | 600 | 600 | 550 | 550 | 500 |

nm

c)

K · Δp = K · 0,1 bar

| L | | | | | |
|---|---|---|---|---|---|
| | | | | | |
| | 0 | 0 | 0 | 0 | 0 |
| | | | | | |
| | | | | | |
| | 0 | 0 | 0 | 0 | 0 |

nm

e)

K · Δp = K · 0,1 bar

| L | | | | | |
|---|---|---|---|---|---|
| | | | | | |
| | 0 | 0 | 1 | 1 | 2 |
| | | | | | |
| | | | | | |
| | -2 | -2 | -1 | -1 | 0 |

nm

FIG.4